Europäisches Patentamt

European Patent Office

Office européen des brevets

(19)

(11) Numéro de publication: **0 018 517**

**A1**

(12) ## DEMANDE DE BREVET EUROPEEN

(21) Numéro de dépôt: **80101911.8**

(22) Date de dépôt: **10.04.80**

(51) Int. Cl.³: **H 04 L 1/24**
 **H 04 L 11/12**

(30) Priorité: **03.05.79 FR 7911813**

(43) Date de publication de la demande:
**12.11.80 Bulletin 80'23**

(84) Etats Contractants Désignés:
**DE FR GB**

(71) Demandeur: **International Business Machines
Corporation**

**Armonk, N.Y. 10504(US)**

(72) Inventeur: **Bonnet, Yves
Villa Mag Avenue du Zoo
F-06700 - Saint Laurent du Var(FR)**

(72) Inventeur: **Cukier, Maurice
Mas "Douchka" 345 Chemin de la Fontette
F-06140 - Vence(FR)**

(72) Inventeur: **Haas, Lee Clyde
812 Merwin Road
Raleigh, NC 27606(US)**

(72) Inventeur: **Orengo, Gérard
Les "Hortensias B" Chemin des Ames du Purgatoire
F-06600 Antibes(FR)**

(72) Inventeur: **Smith Robert
Villa La Farigoule Chemin de la Chèvre d'Or
F-06410 - Biot(FR)**

(74) Mandataire: **Lattard, Nicole
COMPAGNIE IBM FRANCE Département de Propriété
Industrielle
F-06610 La Gaude(FR)**

(54) Dispositif de diagnostic et d'alarme pour un réseau de communication de données.

(57) --Chaque station du réseau est pourvue d'un dispositif de diagnostic et d'alarme, (9-1), dans la station de commande (1) et (9-2) et (9-3) dans les stations tributaires. -- En mode de commande, cas de (9-1), le dispositif peut envoyer sous contrôle du modem (8-1) une tonalité d'alarme sur la ligne (12-1) afin que les modems des stations tributaires soient mis en mode test. En mode tributaire, cas des dispositifs (9-2) et (9-3), une tonalité d'alarme est envoyée à la station de commande par les lignes (12-2) et (12-3) si une panne d'alimentation ou autre est détectée dans le modem associé. Les dispositifs (9) comprennent des moyens pour reconnaître la tonalité d'alarme, et des moyens pour détecter les pannes et provoquer l'envoi de la tonalité.

./...

EP 0 018 517 A1

FIG. 1

1

# DISPOSITIF DE DIAGNOSTIC ET D'ALARME POUR
# UN RESEAU DE COMMUNICATION DE DONNEES

## Description

## Domaine Technique

La présente invention concerne un dispositif de diagnostic de pannes et d'alarme destiné à un réseau de communication de données numériques entre des équipements terminaux par l'intermédiaire de modems. Elle concerne plus particulièrement un dispositif de diagnostic qui est associé à chaque modem du réseau pour détecter les pannes d'alimentation dans les modems ou détecter qu'une procédure de test a échoué et envoyer une tonalité d'alarme.

Dans un réseau de communication de données du type point à point ou multipoint, les modems servent d'interface entre les équipements terminaux DTE et le canal de transmission pour moduler les données numériques émises par un équipement terminal afin qu'elles soient compatibles avec les caractéristiques du canal de transmission et démoduler les données destinées à un équipement terminal pour qu'elles puissent être traitées par cet équipement. Les réseaux de ce type sont maintenant bien connus et largement utilisés pour transmettre des données entre équipements terminaux.

Lorsque dans un tel réseau une panne relative à une station tributaire est décelée, l'opérateur situé à la station de commande est souvent incapable de décider si la panne est imputable à l'équipement terminal DTE, au modem, par exemple pannes d'alimentation ou à la ligne téléphonique.

En conséquence la nécessité s'est fait sentir de pouvoir détecter automatiquement des pannes dans un réseau afin que la station de commande soit avertie par une tonalité envoyée sur le canal de transmission sans passer par l'intermédiaire

2

des opérateurs et sans utiliser un canal de transmission
auxiliaire.

Exposé de l'Invention

Un objet de la présente invention est donc de fournir un
dispositif de diagnostic et d'alarme qui peut être associé à
chaque modem d'un réseau de transmission pour détecter
qu'une panne s'est produite dans un réseau de communication
et envoyer une tonalité d'alarme.

Un autre objet de la présente invention est de réaliser un
dispositif de diagnostic et d'alarme destiné à être associé
aux modems d'un réseau de communication de données, qui
soit modulaire c'est-à-dire qui puisse être associé au modem
de la station de commande ou au modem des stations tributaires.

Conformément à la présente invention dans un réseau de
communication de données du type multipoint c'est-à-dire
dans lequel une station de commande comprenant un équipement
terminal et un modem, communique avec des stations tributaires comprenant elles aussi un équipement terminal et un
modem, les stations tributaires étant toutes reliées à la
station de commande par l'intermédiaire de canaux de transmission, chaque modem est muni d'un dispositif de diagnostic
et d'alarme.

Le dispositif de diagnostic et d'alarme associé au modem
d'une station tributaire comprend des moyens pour détecter
qu'une panne d'alimentation s'est produite dans le modem
associé et pour envoyer en conséquence une tonalité d'alarme
au dispositif de diagnostic et d'alarme de la station de
commande. Il comprend de plus des moyens pour détecter
qu'une tonalité d'alarme est reçue de la station de commande
pour faire passer le modem associé en mode de test et renvoyer une tonalité d'alarme à la station de commande si le test a fait ressortir des anomalies de fonctionnement.

Le dispositif de diagnostic et d'alarme de la station de commande comporte des moyens pour détecter qu'une tonalité d'alarme est reçue en provenance d'une station tributaire et des moyens pour envoyer une tonalité d'alarme aux stations tributaires lorsque l'opérateur à la station de commande désire qu'un test du réseau soit réalisé.

En réponse, aux ordres de test reçus, les stations tributaires amorcent une procédure de test. Si dans une ou plusieurs stations tributaires une erreur est détectée, le ou les dispositifs de diagnostic et d'alarme des stations correspondantes enverront la tonalité d'alarme. La station de commande sera donc avertie par un signal appelé "tonalité d'alarme détectée" que le réseau de communication présente des anomalies.

Dans tous les cas où une tonalité d'alarme est reçue par le dispositif de diagnostic et d'alarme de la station de commande, une procédure d'interrogations systèmatiques des stations tributaires peut être amorcée si on désire déterminer dans quelle(s) station(s) le(s) modem(s) présente(nt) une anomalie de fonctionnement.

Conformément à une caractéristique de l'invention les dispositifs de diagnostic et d'alarme de la station de commande et des stations tributaires sont identiques, ils présentent deux modes de fonctionnement distincts à savoir: mode de commande ou mode tributaire; ces modes sont choisis suivant que le dispositif est associé à une station de commande ou à une station tributaire.

D'autres objets, caractéristiques et avantages de la présente invention ressortiront mieux de l'exposé qui suit, fait en référence aux dessins annexés à ce texte, qui représentent un mode de réalisation préféré de celle-ci.

4

## Brève description des figures

La figure 1 représente une configuration de réseau de communication dans laquelle sont incorporés des dispositifs conformes à la présente invention.

La figure 2 représente le schéma simplifié d'un dispositif de diagnostic et d'alarme.

La figure 3 représente le schéma détaillé d'un mode de réalisation de détecteur de pannes d'alimentation.

La figure 4 représente les connexions du détecteur de la figure 3 permettant de réaliser les fonctions représentées sur la figure 2.

La figure 5 représente le schéma d'un détecteur de tonalité d'alarme.

La figure 6 représente un mode de réalisation préféré du dispositif de diagnostic et d'alarme.

La figure 7 représente la chronologie des signaux générés par le circuit 73 de la figure 6.

La figure 8 représente la chronologie des signaux logiques de commande pour la mémoire 70 de la figure 6, lorsque le circuit fonctionne en mode tributaire.

## Description détaillée de l'invention

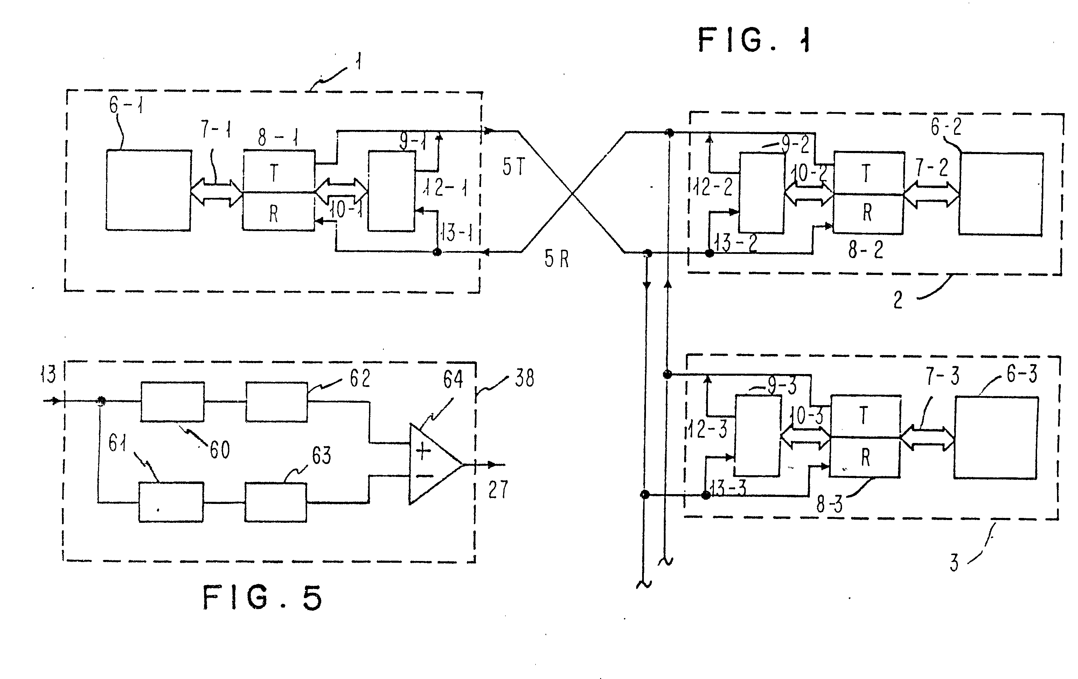

En référence à la figure 1 on va décrire très succintement un type de réseau de communication dans lequel sont inclus les dispositifs de diagnostic et d'alarme conformes à la présente invention. Ce réseau n'est donné qu'à titre d'exemple pour faciliter la description de l'invention, étant bien

5

entendu que d'autres types de configuration peuvent être utilisés, par exemple point à point ou autres.

On n'a représenté que trois stations du réseau, une station de commande 1 et deux stations tributaires 2 et 3 communiquant par des liaisons à quatre fils 5T et 5R. Les trois stations comportent les mêmes éléments, qui auront donc les mêmes numéros de références suivis d'un suffixe 1, 2 ou 3 indiquant la station dans laquelle ils se trouvent. En conséquence, seule une station sera décrite, par exemple la station 1.

La station 1, comprend un équipement terminal de données (DTE), 6-1 qui peut émettre ou recevoir des données numériques par un bus, 7-1. Un modem 8-1, comprenant une partie émission symbolisée par la lettre T sur le dessin et une partie réception symbolisée par la lettre R, traite les données transmises ou reçues par l'équipement 6-1. Les données à émettre sont modulées dans la partie T et les données reçues sur la liaison 5R, destinées à l'équipement sont démodulées dans la partie R. Equipement terminal et modem sont les éléments classiques d'une station d'un réseau de communication. Les stations tributaires 2 et 3 sont disposées en parallèle et communiquent avec la station de commande à laquelle elles sont raccordées. Cette configuration étant classique, ne sera pas décrite davantage.

Dans ce réseau de communication est associé à chaque modem 8-1, 8-2, 8-3, un dispositif de diagnostic et d'alarme 9-1, 9-2 et 9-3, respectivement. Ce dispositif est connecté au modem associé par un bus comportant plusieurs lignes de commande, à savoir bus 10-1, 10-2 et 10-3 et il peut émettre ou recevoir un signal d'alarme sur les lignes 5T et 5R. Par exemple, le dispositif 9-1 reçoit une tonalité d'alarme de la station tributaire 2, cette tonalité est émise par la ligne de sortie 12-2 du dispositif 9-2 transmise par la ligne 5R et reçue par le dispositif 9-1 par la ligne 13-1.

6

Si de la station de commande on veut envoyer une tonalité d'alarme à la station tributaire 3, par exemple, cette tonalité est émise par la ligne de sortie 12-1 du dispositif 9-1 transmise par la ligne 5T et reçue par la ligne d'entrée 13-3 du dispositif 9-3.

Pour décrire le fonctionnement des dispositifs de diagnostic et d'alarme, on va tout d'abord supposer que dans un modem d'une station tributaire, par exemple 2, se produit une panne d'alimentation. Le dispositif 9-2 détecte cette panne et envoie sur la ligne 12-2 une tonalité d'alarme pour avertir la station de commande dans laquelle le dispositif 9-1 reconnaît parmi les données, qui peuvent venir d'une autre station sur la liaison 5R, la tonalité d'alarme reçue sur la ligne 13-1. En conséquence la station de commande sait qu'une des stations est en panne et que le réseau ne fonctionne plus correctement.

On va maintenant supposer que l'opérateur à la station de commande désire que les modems des stations tributaires 2, 3, etc. soient mis en mode de test. Le dispositif 9-1 de la station de commande envoie la tonalité d'alarme par la ligne 12-1 et la voie 5T. Cette tonalité est reçue par les lignes d'entrée 13-2 et 13-3 et elle est détectée par les dispositifs 9-2, 9-3. Une indication "tonalité d'alarme reçue" est envoyée aux modems 8-2, 8-3 par une des lignes des bus 10-2, 10-3, les modems savent donc qu'ils doivent se mettre en mode de test. Si la procédure de test indique un mauvais fonctionnement, dans le ou les modems des stations tributaires, une tonalité d'alarme est renvoyée au dispositif 9-1 de la station de commande.

Comme le montre la description précédente, les dispositifs de diagnostic et d'alarme, qu'ils se trouvent dans une station de commande ou dans une station tributaire sont physiquement identiques, en ce sens qu'ils doivent comprendre des moyens pour envoyer la tonalité d'alarme et des moyens

7

pour détecter cette tonalité d'alarme, seuls leurs modes de commande diffèrent. On peut donc distinguer deux modes de fonctionnement, à savoir: un mode de commande qui est le mode de fonctionnement du dispositif de diagnostic et d'alarme à la station de commande et un mode tributaire qui est le mode de fonctionnement des dispositifs de diagnostic et d'alarme dans les stations tributaires.

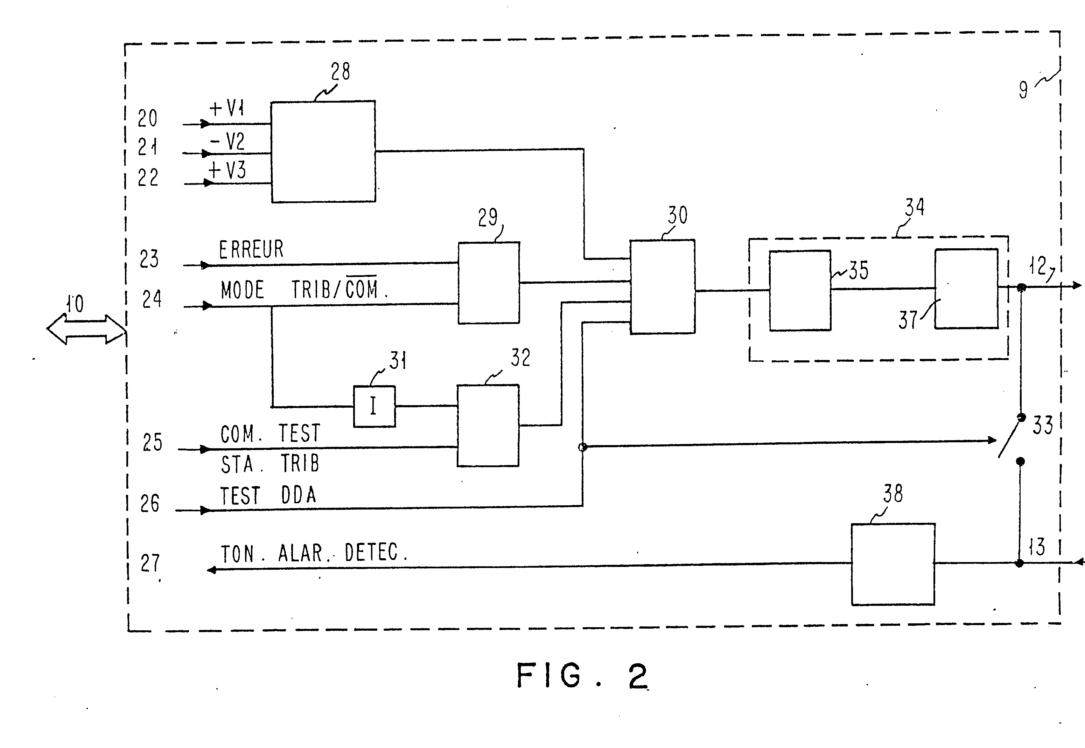

En référence à la figure 2, on va décrire le schéma d'un dispositif de diagnostic et d'alarme 9 qui peut être utilisé dans une des stations 1, 2 ou 3.

Les éléments communs aux figures 1 et 2 portent les mêmes numéros de références, on n'a pas ajouté le suffixe identifiant la station étant donné que le dispositif représenté sur la figure 2 peut être utilisé comme dispositif de diagnostic et d'alarme, DDA 9 dans n'importe quelle station.

Le bus 10 représenté sur la figure 1 entre un dispositif 9 et le modem 8 est composé de lignes distinctes 20 à 27. Les lignes 20, 21, 22 amènent au dispositif 9, les tensions d'alimentation +V1, -V2, V3 du modem, tensions dont on veut détecter les pannes. Ces trois lignes sont connectées à un circuit de détection de panne d'alimentation 28 dont un mode de réalisation préféré sera décrit par la suite.

La ligne 23 venant du modem transporte le signal indiquant qu'une erreur s'est produite au cours d'un test réalisé dans le modem. La ligne 24 venant elle aussi du modem porte un signal MODE TRI./$\overline{\text{COM}}$, qui s'il est à un niveau logique 1 indique que le dispositif 9 est associé à une station tributaire et qui s'il est à un niveau logique 0 indique que le dispositif 9 est associé à une station de commande. La ligne 25 venant du modem porte un signal COM.TEST STA.TRIB. qui est un signal de commande de test des stations tributaires. La ligne 26 venant du modem porte un signal TEST DDA qui est un signal de commande du test du dispositif de diagnostic et d'alarme lui-même. La ligne 27 allant au modem porte le signal TON.ALAR.DETECT. qui est le signal indiquant que la tonalité d'alarme a été détectée.

Les lignes 23 et 24 sont connectées aux entrées d'une porte ET 29 dont la sortie est connectée à une des entrées d'une porte OU 30. La ligne 24 est connectée par un inverseur 31 à une entrée d'une porte ET 32 dont l'autre entrée est constituée par la ligne 25. La sortie de la porte ET 32 est appliquée à une des entrées de la porte OU 30. La dernière entrée de la porte OU 30 reçoit le signal de commande de TEST DDA, signal qui sert aussi de commande à un commutateur 33. La sortie du circuit OU 30 fournit un signal de commande de mise en service à un ensemble 34, comprenant un oscillateur 35 générant la tonalité d'alarme, et un circuit d'attaque de ligne 37. La sortie du circuit 34 constitue la ligne 12 de la figure 1, sur laquelle est ou non émise une tonalité d'alarme suivant l'état du signal de commande de mise en service.

La ligne 13 de la figure 1, est connectée à un détecteur de tonalité d'alarme 38, qui reconnaît dans le signal reçu sur la ligne 13 que la tonalité d'alarme choisie est présente. La sortie du circuit 33 constitue la ligne 27 amenant l'information TON.ALAR.DETEC. au modem.

Le commutateur 33, quand il est fermé sous commande du signal sur la ligne 26, permet de boucler la sortie du circuit 34 sur l'entrée du circuit 38 afin d'effectuer un test du dispositif 9, lui-même.

Dans un mode de réalisation particulier de l'invention la tonalité d'alarme est constituée par un signal sinusoïdal de fréquence 350 Hz. Cette fréquence est choisie à l'extérieur de la bande de fréquences du modem à savoir 800 et 2500 Hz et dans la bande de fréquences téléphoniques pour pouvoir être transmise.

9

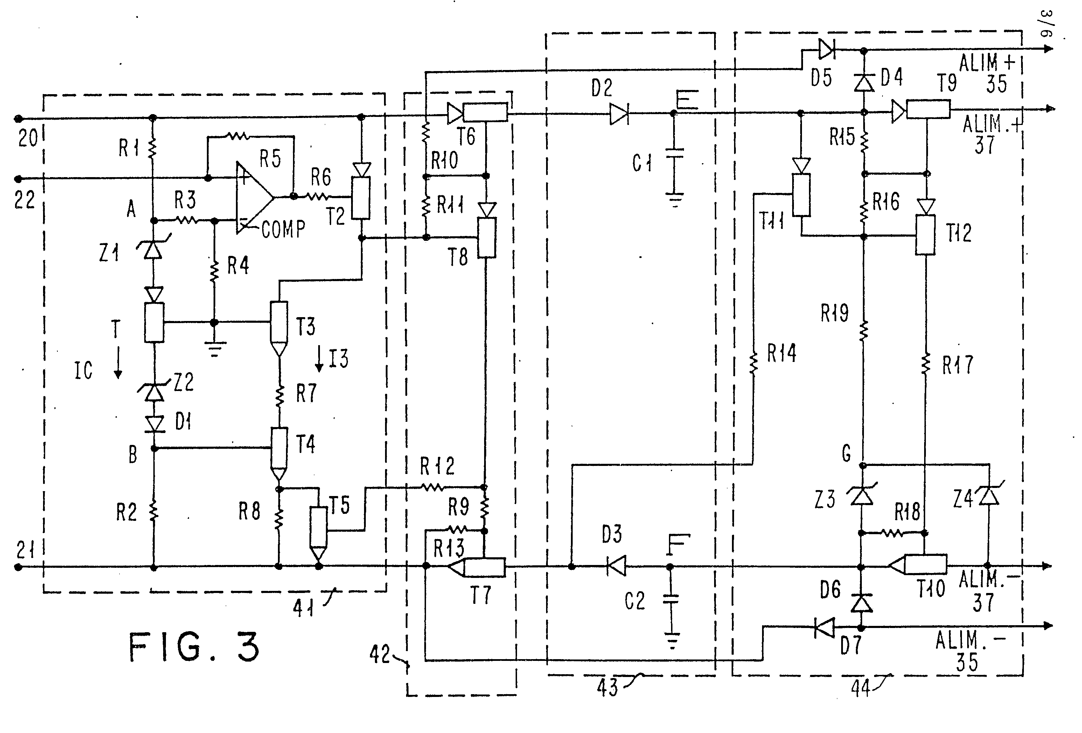

On va maintenant décrire le fonctionnement du dispositif de diagnostic et d'alarme. Le circuit 28, comme on l'a dit précédemment, détecte les chutes des tensions d'alimentation du modem, et envoie un signal de commande de mise en service au circuit OU 30, signal qui est transmis à l'ensemble 34 et le met en condition pour envoyer la tonalité d'alarme sur la ligne 12. Pour réaliser cette fonction le circuit 28 comprend un circuit de détection de la perte de puissance et un circuit d'alimentation de réserve qui peut être constitué par une alimentation de secours, par exemple une batterie ou par des capacités emmagasinant l'énergie de réserve nécessaire pour actionner l'ensemble 34 pendant un temps suffisant à l'émission de la tonalité d'alarme. On décrira en référence à la figure 3 un type de circuit à capacités qui présente par rapport au circuit à batterie l'avantage de prendre moins de place mais qui du fait de la décharge des capacités limite le temps pendant lequel la tonalité d'alarme peut être envoyée, ce qui complique légèrement le schéma du détecteur 38.

La tonalité d'alarme sera donc émise sur la ligne 12 dès qu'une panne d'alimentation est détectée. Il est bien entendu que si la tonalité d'alarme est émise par le dispositif 9 d'une station de commande, le signal correspondant TON.ALAR. DETECT. sera détecté par les modems des stations tributaires. Il est bien évident que dans ce cas tout le réseau est désorganisé du fait de la panne à la station de commande et toutes les procédures ultérieures peuvent être ignorées. Le dispositif 28 n'a été inclus dans le dispositif de diagnostic et d'alarme de la station de commande que pour rendre le système modulaire et que par exemple on puisse réaliser une configuration point-à-point. En effet dans le cas d'une configuration multipoint le dispositif 28 pourrait être omis dans le dispositif DDA de la station de commande.

Le circuit OU 30 provoque aussi l'envoi d'un signal de commande de mise en service de l'ensemble 34 provoquant

10

l'envoi de la tonalité d'alarme lorsque l'on est en mode tributaire: signal MODE TRIB/$\overline{\text{COM}}$ au niveau logique 1, et que le test du modem associé a indiqué une erreur sur la ligne 23, à ce moment la porte ET 29 fournit un signal de commande au niveau logique 1 transmis par la porte OU à l'ensemble 34.

De même lorsqu'on est en mode de commande, signal MODE TRIB/$\overline{\text{COM}}$ au niveau logique 0, appliqué à l'inverseur 31 un signal au niveau logique 1 conditionne la porte ET 32 qui laisse passer le signal COM.TEST.STA.TRIB. sur la ligne 25 et envoie par la porte OU 30, un signal commandant la mise en service de l'ensemble 34, lorsqu'un test des stations tributaires est désiré.

L'ensemble 34 est aussi mis en service pour envoyer la tonalité d'alarme lorsque le signal sur la ligne 26 TEST DDA est actif.

A ce moment le commutateur 33 est fermé et la tonalité d'alarme émise par l'ensemble 34 est bouclée sur le détecteur 38. Ainsi le test du dispositif de diagnostic et d'alarme peut être effectué.

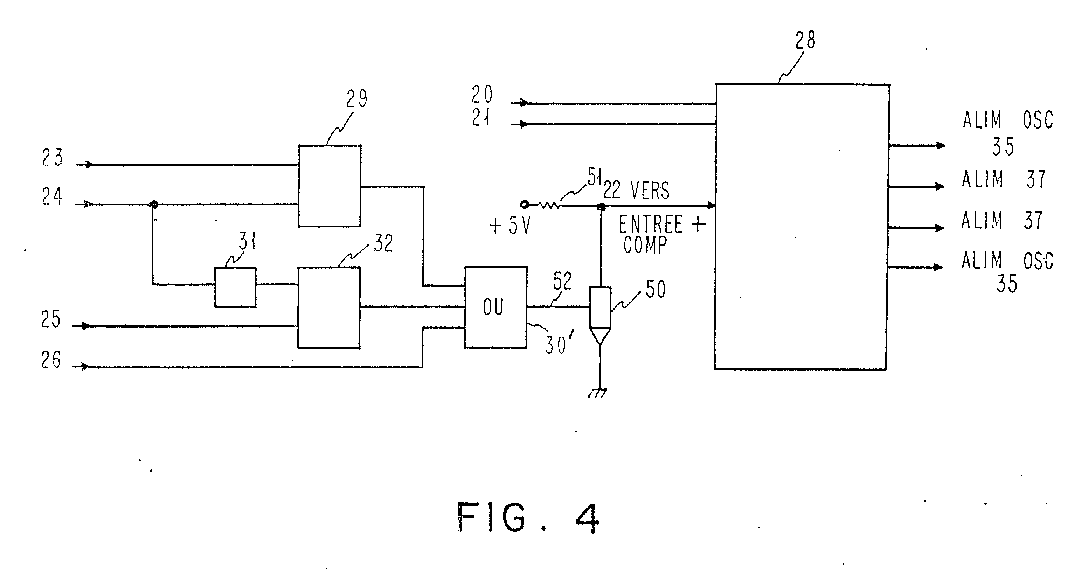

Le signal reçu sur la ligne 13, et appliqué au détecteur de tonalité 38 dont la fonction est de reconnaître la tonalité d'alarme. Cette tonalité d'alarme doit être reconnue en présence d'un signal modem et en présence de bruit. De plus un signal de bruit ne doit pas être interprété comme une tonalité d'alarme. Un circuit permettant de réaliser cette fonction sera décrit en référence à la figure 4.

En référence à la figure 3, on va maintenant décrire un mode de réalisation préféré du circuit de détection 28 de la figure 3. Dans la description de ce circuit on suppose que le modem est pourvu de trois tensions d'alimentation à savoir V1=+8,5 volts, V3=+5 volts et V2=-8,5 volts.

11

Ce détecteur comprend un premier circuit 41 de détection proprement dite qui commande un circuit de commutation 42, un circuit 43 comprend les capacités d'alimentation de réserve et un second circuit de commutation 44 fournit les signaux de commande de mise en service du dispositif 34 de la figure 2.

Le circuit 41 comporte des éléments permettant de détecter que les tensions d'alimentation +8,5 volts sur la borne 20, +5 volts sur la borne 22 et -8,5 volts sur la borne 21. chutent en dessous de seuils, au-dessous desquels le modem ne peut plus fonctionner. Une branche de circuit montée entre les bornes 20 et 21 et comprenant en série une résistance R1, une diode zener Z1, un transistor T1, une diode zener Z2, une diode D1 et une résistance R2 permet de fixer les seuils. La borne A de la résistance R1, est connectée à l'entrée moins d'un comparateur par une résistance R3. L'entrée moins du comparateur COMP est reliée à la masse par une autre résistance R4. Le comparateur COMP comprend une résistance R5 reliant sa sortie à l'entrée + et sa sortie est connectée à la base d'un transistor T2 via une résistance R6. L'émetteur du transistor T2 est relié à la borne 20 (+8,5 volts) et son collecteur est relié au collecteur du transistor T3. La base du transistor T3 est connectée à la masse, son émetteur est connecté par une résistance R7 au collecteur du transistor T4 dont la base est connectée à la borne B de la résistance R2. L'émetteur du transistor T4 est connecté d'une part à la borne 21 (-8,5 volts) par une résistance R8 et au collecteur d'un transistor T5 d'autre part. L'émetteur de T5 est connecté à la borne -8,5 volts, et sa base est relié au bloc de commutation 42.

Le bloc de commutation 42 comprend trois transistors T6, T7 et T8. Les émetteurs de T6 et T7 sont connectés aux bornes 20 et 21 respectivement, et leurs collecteurs sont reliés au bloc 43. La base du transistor T6 est reliée à l'émetteur d'un transistor T8 dont le collecteur est relié à la base du transistor T7 par une résistance R9. L'émetteur du transistor T6 est connecté à la base de T8 par un pont diviseur comprenant deux résistances R10, R11 dont le point commun est connecté à l'émetteur de T8. La base du transistor T8 est connectée au collecteur du transistor T2 dans le bloc 41. La base du transistor T5 dans le bloc 41 est connectée au collecteur du transistor T8 par une résistance R12. La base et l'émetteur du transistor T7 sont reliés par une résistance R13.

Le bloc 43 comprend deux capacités C1 et C2 et deux diodes D2 et D3. L'anode de la diode D2 est connectée au collecteur du transistor T6 et sa cathode a une borne E de la capacité C1. L'autre borne de la capacité est reliée à la masse. La cathode de la diode D3 est connectée au collecteur du transistor T7 et son anode est reliée à la borne F de la capacité C2 dont l'autre borne est reliée à la masse.

Les bornes E et F sont reliées au second circuit de commutation 44. Ce circuit comprend deux transistors T9 et T10, l'émetteur de T9 est connecté à la borne E et son collecteur constituera une commande du circuit 34, l'émetteur du transistor T10 est connecté à la borne F et son collecteur constitue une autre commande du circuit 34. Le collecteur du transistor T7 est connecté par une résistance R14 à la base d'un transistor T11 dont l'émetteur est connecté à la borne E et le collecteur à la base d'un transistor T12.

L'émetteur du transistor T12 est connecté à la base du transistor T9 d'une part et au point commun de deux résistances R15, R16 montées en série entre l'émetteur du transistor T9 et la base du transistor T12. Le collecteur du transistor T12 est connecté à la base du transistor T10 par une résistance R17. Une résistance R18 connecte la base et l'émetteur du transistor T10.

Deux diodes Zener Z3 et Z4 ont leurs cathodes connectées en commun à la borne G de la résistance R19 dont l'autre borne

13

est reliée à la base du transistor T12. L'anode de la diode Zener Z3 est connectée à l'émetteur du transistor T10 et l'anode de la diode Zener Z4 est connectée au collecteur de ce même transistor.

Un circuit OU comprend deux diodes D4, D5. Les cathodes de ces diodes reliées en commun constituent la sortie du circuit OU connectée au circuit 34. L'anode de la diode D5 est connectée à la borne 20 et l'anode de la diode D4 est connectée à la borne E.

De même un circuit OU comprend deux diodes D6, D7. Les anodes de ces diodes reliées en commun constituent la sortie du circuit OU connectée au circuit 34. La cathode de la diode D6 est connectée à la borne F et la cathode de la diode D7 est connectée à la borne 21.

On va maintenant décrire le fonctionnement de ce détecteur de pannes d'alimentation.

Le principe de fonctionnement est le suivant, lorsque les alimentations fonctionnent normalement et fournissent des tensions supérieures aux seuils au-dessous desquelles le modem ne fonctionnerait plus, les transistors T6 et T7 du circuit de commutation 42 sont conducteurs en conséquence de quoi les capacités sont chargées.

Inversement lorsqu'au moins une des tensions d'alimentation chute au-dessous du seuil, les transistors T6 et T7 sont bloqués. Les diodes D2 et D3 deviennent polarisées en inverse ce qui empêche les capacités de se décharger vers les alimentations. Les capacités alimentent le bloc 44 dans lequel les transistors T9 et T10 sont rendus conducteurs. En conséquence, le trajet collecteur du transistor T9 sert d'alimentation positive au circuit d'attaque 37 (figure 2) et le trajet collecteur du transistor T10 sert d'alimentation négative à ce même circuit d'attaque. Le circuit

14

d'attaque qui ne sera pas décrit car c'est un élément classique dans les systèmes de transmission, est généralement constitué d'un ou plusieurs amplificateurs opérationnels qui pour fonctionner nécessitent des alimentations positive et négative ALIM+ et ALIM-.

L'oscillateur 35 de la figure 2 est généralement lui aussi constitué de plusieurs amplificateurs opérationnels, dont les alimentations positive et négative ALIM+ et ALIM- sont fournies par les circuits OU D4, D5 et D6, D7. Grâce à ces circuits OU l'oscillateur est toujours alimenté soit par les bornes 20 et 21 si les alimentations fonctionnent correctement soit par les capacités si les alimentations sont en panne, et la commande de l'envoi ou non de la tonalité d'alarme est réalisée en agissant sur le circuit d'attaque 37 comme précédemment indiqué.

Dans le bloc 41 de la figure 3, une première tension de seuil VTH1 est générée par la résistance R1, la diode Zener Z1 et la jonction émetteur-base du transistor T1, une seconde tension de seuil VTH2 est générée par la diode Zener Z2 et la diode D1.

Une troisième tension de référence VTH3 est dérivée de VTH1 par les résistances R3 et R4 et appliquée à l'entrée du comparateur COMP.

Lorsque les tensions aux bornes 20 et 21 deviennent supérieures aux seuils VTH1 et VTH2 un courant collecteur IC circule dans le chemin collecteur du transistor T1, la tension au point B augmente et rend T4 conducteur ainsi que T3. Le courant I3 augmente et rend le transistor T8 conducteur, ce qui a pour effet de rendre conducteur les transistors T6 et T7. La résistance R7 limite le courant I3 lorsque T4 se sature. Cet état est maintenu lorsque les tensions en 20 et 21 sont supérieures aux seuils ce qui a pour effet de charger les capacités C1 et C2. La résistance R9 a pour but

15

de limiter le courant de charge de C1 et C2, au moment de l'application des tensions en 20 et 21.

Lorsque les tensions sur l'une ou l'autre borne ou sur les deux bornes 20 et 21 chutent par suite d'une panne et deviennent inférieures aux seuils VTH1 et VTH2, les courants IC et I3 diminuent jusqu'à ce que le transistor T5 se bloque réduisant I3 d'une façon importante et bloquant le transistor T8, en conséquence les transistors T6 et T7 sont bloqués.

Lorsque la tension sur la borne 22 est inférieure au seuil VTH3 le transistor T2 est saturé, ce qui bloque le transistor T8. De la même façon que dans le cas des chutes des alimentations sur les bornes 20 et 21, les transistors T6 et T7 sont bloqués et la panne a été détectée.

Le rôle du transistor T5 est d'accélérer le bloquage du transistor T8 par le fait qu'il permet au courant I3 de diminuer jusqu'à ce que T8 se bloque.

Dans le bloc de commutation 44, tant que les transistors T6 et T7 sont conducteurs et chargent les capacités C1 et C2 les transistors T9 et T10 sont bloqués.

En effet lorsque T7 est conducteur le transistor T11 est saturé et la diode Zener Z2 conduit dans R19.

Lorsque le transistor T7 se bloque, le transistor T11 se bloque. Le courant I Z3, dans la diode Z3, à travers la résistance R19, rend le transistor T12 conducteur. Les transistors T9 et T10 se saturent. La tension Zener VZ4, appliquée par T10 à Z3 vient bloque celle-ci (VZ3 > VZ4). Le transistor T12 est maintenu saturé par le courant I Z4. Les transistors T9 et T10 sont donc maintenus conducteurs, alimentant le circuit d'attaque 37, tant que la tension fournie par les capacités est supérieure à un seuil fixé par la diode Zener Z4.

16

Avec le circuit de détection représenté sur la figure 3, on peut provoquer l'envoi de la tonalité d'alarme même lorsque les tensions d'alimentation ont une valeur normale, en simulant une panne de la tension +5 volts. Ceci peut être réalisé simplement en ajoutant un transistor 50 disposé comme représenté sur la figure 4. La borne 22 est reliée à l'entrée + du comparateur et à la tension +5 volts à travers la résistance 51. Le transistor 50 a son collecteur relié à l'entrée + du comparateur COMP et son émetteur relié à la masse.

La logique de la figure 2, destinée à commander l'envoi d'une tonalité d'alarme à savoir la logique comportant les portes ET 29, 32 et l'inverseur 31, et recevant les signaux de commande sur les lignes 23, 24, 25 et 26 a été redessiné sur la figure 4. Les sorties des portes ET 29 et 32 et le signal sur la ligne 26 (TEST DDA) sont appliqués à une porte OU 30', dont la sortie contrôle la conduction du transistor 50. En conséquence, lorsque le transistor 50 est conducteur, la tension à l'entrée du comparateur chute, ce qui simule une panne de la tension d'alimentation, 5V, et provoque l'envoi de la tonalité comme cela a été expliqué en référence à la figure 3. Lorsqu'aucun signal n'est fourni par la porte OU 30', le transistor 50 est bloqué et à ce moment le détecteur, de la figure 3 détecte les pannes d'alimentation, comme expliqué en référence à la figure 3, puisque l'entrée + du comparateur est reliée à la borne 22.

Sur la figure 4, le détecteur 28 de la figure 3 a été représenté sous forme d'un bloc avec ses entrées 20, 21, l'entrée au comparateur et ses quatre sorties ALIM+ 35, ALIM- 35, ALIM+ 37 et ALIM- 37.

Cette figure 4 n'est donné que pour montrer comment le détecteur de la figure 3 peut être incorporé dans le systeme représenté globalement sur la figure 2.

17

On va maintenant donner à titre d'exemple comment est réalisé le détecteur de tonalité 38 de la figure 2.

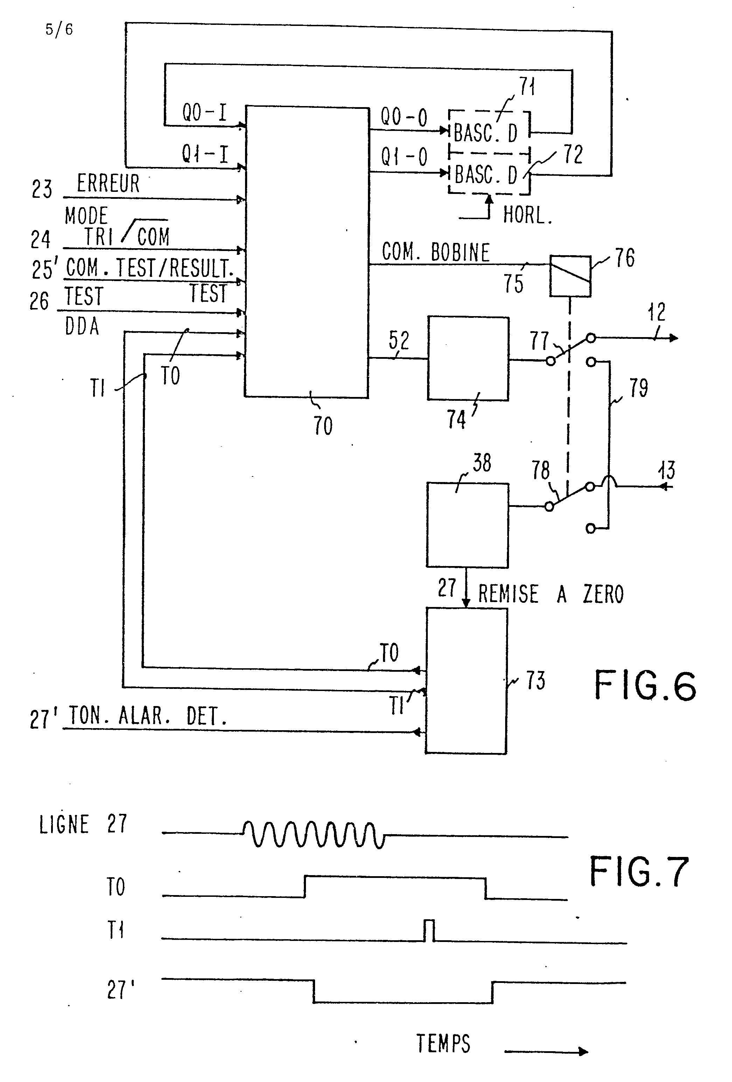

Le détecteur 38 représenté sur la figure 5 comprend deux filtres 60 et 61. Le filtre 60 est accordé sur la fréquence de la tonalité d'alarme et en conséquence, le filtre 61 est un filtre passe-bande 800 à 2500 Hz, correspondant à la bande passante des signaux de données reçus par un modem. Les signaux filtrés par les filtres 60 et 61 sont appliqués à des redresseurs 62 et 63 respectivement. La sortie du redresseur 62 est appliquée à l'entrée + d'un comparateur 64 et la sortie du redresseur 63 est appliqué à l'entrée - du comparateur 64.

Si dans le signal reçu sur la ligne 13, une tonalité d'alarme est mélangée à un signal de données, elle sera séparée du signal de données par le filtre 60 et le redresseur, et le comparateur détectera que la tonalité d'alarme est présente. Si seule une tonalité d'alarme est présente sans signal de données, elle sera toujours filtrée par le filtre 60 et détectée par le comparateur 64. Les composants 60 à 64 du détecteur 38 sont des circuits classiques et en conséquence ne seront pas décrits en détail.

En référence à la figure 6, on va décrire un mode de réalisation préféré de l'invention qui comprend une mémoire morte programmable pour réaliser les fonctions logiques représentées sur la figure 4.

Dans ce mode de réalisation il est fait usage du détecteur de pannes d'alimentation de la figure 3 qui n'est donc pas représenté de nouveau.

La mémoire morte programmable 70 comporte huit lignes d'entrée et quatre lignes de sortie et elle est programmée conformément aux tables de vérité données ci-après dans les tableaux I à IV. Les lignes 23, 24 et 26 portent les mêmes

18

signaux de commande que les lignes de mêmes références sur les figures 2 et 4 mais dans ce mode de réalisation le signal mode TRI/$\overline{\text{COM}}$ est au niveau logique 0 pour le mode tributaire et au niveau logique 1 pour le mode de commande.

La ligne 25' porte l'information de commande de test et de résultat de test COM.TEST/RESUL.TEST, c'est-à-dire qu'elle sera active en mode de commande pour provoquer la commande du test des stations tributaires et en mode tributaire pour confirmer le bon déroulement du test.

Deux lignes d'entrée supplémentaires Q0-I et Q1-I sont prévues, ces lignes sont constituées par les sorties de deux éléments de retard, par exemple des bascules de type D 71 et 72, dont les entrées sont constituées par deux lignes de sortie Q0-0 et Q1-0 de la mémoire 70. La fonction de ces bascules est de rendre la logique séquentielle.

Deux lignes d'entrée supplémentaires T0 et T1 sont connec- tées à la mémoire 70, à partir d'un circuit de mise en séquence 73 qui à partir de la sortie du détecteur de tonalité 38, génère les signaux T0 et T1 ainsi que le signal TONALITE D'ALARME DETECTEE sur la ligne 27'. Ce circuit 73 a pour fonction d'une part de vérifier que la séquence de test du modem ne dépasse pas un délai maximum de l'ordre d'une seconde et d'autre part de limiter la durée du test.

La mémoire 70 comporte deux sorties 52 et 75. La sortie 52, porte le signal de commande d'envoi de tonalité qui est appliqué au générateur d'envoi de tonalité 74, comportant le transistor 50, le circuit 28 de la figure 4, et le générateur proprement dit 34 de la figure 2. La sortie 75 porte un signal d'excitation de la bobine 76 COM.BOBINE provoquant les changements d'état simultanés des commutateurs 77 et 78. Les commutateurs sont normalement dans la position représentée sur le dessin pour connecter la sortie du circuit 74 à la ligne 12 et pour connecter la ligne 13 au circuit 38. Ces

19

commutateurs sont mis dans l'autre position pour provoquer le bouclage par la ligne 79 de la sortie du circuit 74 sur l'entrée du circuit 38 afin de répondre à la commande test DDA.

Les tableaux I à IV en annexe donnent les tables de vérité pour programmer la mémoire, les 0 et les 1 représentent les valeurs logiques 0 et 1 tandis que les points signifient "état indifférent".

Le tableau I représente la sortie Q1-0 en fonction des valeurs des différentes entrées de la mémoire. Par exemple la ligne 1 du tableau I, en annexe, indique que si Q0-I et Q1-I sont à zéro, et si T1 est à un, Q1-0 est à un quels que soient le niveaux sur les lignes 26, 25', 23, 24 et T0.

Le tableau II représente la sortie Q1-0 en fonction des entrées à la mémoire 70.

Le tableau III représente le signal sur la sortie 52, en fonction des entrées de la mémoire.

Le tableau IV représente le signal sur la sortie 75 en fonction des entrées de la mémoire.

La figure 7 représente la chronologie des signaux T0 et T1 par rapport à la tonalité d'alarme reçue sur la ligne 13. Le temps séparant les fronts de montée de T0 et T1 est dans un mode de réalisation préféré, égal à 1 seconde et le temps séparant les fronts de descente de T0 et T1 est de 500ms. De plus il y a un délai d'environ 100ms entre le début de la tonalité d'alarme et le front de montée de T0.

Le fonctionnement du circuit de la figure 6 est le suivant:

En mode TEST DDA, c'est-à-dire lorsque la ligne 26 est active (dans le mode de réalisation préféré elle est mise à

20

la masse), la sortie du circuit 74 est bouclée sur l'entrée 38. Si le dispositif de diagnostic et d'alarme fonctionne correctement le signal de tonalité d'alarme détectée est présent sur la ligne 27'.

En fonctionnement normal, c'est-à-dire lorsque la ligne 26 est inactive, chaque fois qu'une tonalité d'alarme est reçue sur la ligne 13, elle est reconnue par le circuit 38 et dans le circuit de mise en séquence 73, un monostable ayant une constante de temps de 1,4 seconde est actionné fournissant le signal TON.ALAR.DET. sur la ligne 27'.

Dans le mode de commande (entrée 24 à +5 volts), chaque fois que le signal sur la ligne 25' est actif, c'est-à-dire à la masse, la tonalité d'alarme est envoyée sur la ligne 12.

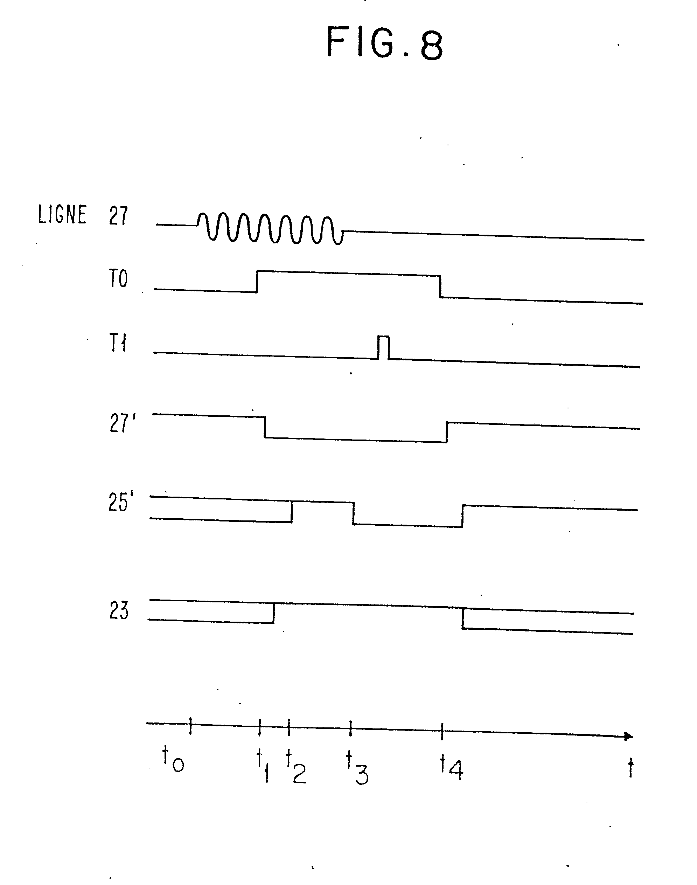

On va maintenant décrire en référence à la figure 8 la chronologie des signaux sur les lignes 23, 25' et 27' et des signaux T0 et T1 dans le mode tributaire (entrée 24 à la masse).

Dès qu'une tonalité d'alarme est détectée en provenance de la station de commande pour provoquer un test dans le modem de la station tributaire, le circuit 73 amorce la génération des signaux T0 et T1, comme représenté sur la figure 8.

Entre les temps t1 et t2, le circuit 70 associé aux bascules 71 et 72, attend que le signal sur la ligne 25' (COM.TEST/ RESLT.TEST) devienne inactif (c'est-à-dire au niveau haut). Si le signal T1 se produit avant que cette condition soit réalisée la ligne 52 est activée pour envoyer la tonalité d'alarme.

Entre les temps t2 et t3, le circuit 70 associé aux bascules 71 et 72, attend que le signal sur la ligne 25' devienne actif (c'est-à-dire bas) et vérifie que le signal sur la ligne 23 est toujours haut (pas d'erreur). Si T1 se produit

21

avant t3 ou si la ligne 23 devient basse, la ligne 52 est activée pour envoyer la tonalité d'alarme.

Entre t3 et t4, le circuit 70 associé aux bascules 71 et 72 attend la fin du test, c'est-à-dire le front de descente de T0, il vérifie que la ligne 25' reste basse et que la ligne 23 reste haute. Si l'une ou l'autre de ces conditions n'est pas respectée, la ligne 52 est activée pour envoyer la tonalité d'alarme.

Bien que l'on ait décrit dans ce qui précède et représenté sur les dessins les caractéristiques essentielles de l'invention appliquées à des modes de réalisation préféré de celle-ci, il est évident que l'homme de l'art peut y apporter toutes modifications de forme ou de détail qu'il juge utiles, sans pour autant sortir du cadre de ladite invention.

ANNEXE I

## TABLEAU I

| Q0-I | Q1-I | 26 | 25' | 23 | 24 | T1 | T0 | Q1-0 |
|------|------|----|-----|----|----|----|----|------|
| 0 | 0 | . | . | . | . | 1 | . | 1 |
| 0 | 0 | . | 0 | . | 1 | . | . | 1 |
| 0 | 0 | . | 1 | . | 0 | . | 1 | 1 |
| 0 | 0 | 0 | . | . | . | . | . | 1 |
| 0 | 0 | 1 | 1 | . | 1 | 0 | . | 0 |
| 0 | 0 | 1 | 1 | . | . | 0 | 0 | 0 |
| 0 | 0 | 1 | 0 | . | 0 | 0 | . | 0 |
| 0 | 0 | 1 | . | . | 0 | 0 | 0 | 0 |
| 0 | 1 | 0 | . | . | . | . | . | 0 |
| 0 | 1 | . | 0 | . | . | . | . | 0 |
| 0 | 1 | . | . | . | . | . | 0 | 0 |
| 0 | 1 | 1 | 1 | . | . | . | 1 | 1 |
| 1 | 0 | 0 | . | . | . | . | . | 1 |
| 1 | 0 | . | . | 0 | . | . | . | 1 |
| 1 | 0 | . | 1 | . | . | . | . | 1 |
| 1 | 0 | 1 | 0 | 1 | . | . | . | 0 |
| 1 | 1 | 1 | 1 | . | . | . | 0 | 0 |
| 1 | 1 | 1 | . | . | 0 | . | 0 | 0 |
| 1 | 1 | . | 0 | . | 1 | . | . | 1 |
| 1 | 1 | 0 | . | . | . | . | . | 1 |
| 1 | 1 | . | . | . | . | . | 1 | 1 |

ANNEXE II

TABLEAU II

| Q0-I | Q1-I | 26 | 25' | 23 | 24 | T1 | T0 | Q0-0 |
|---|---|---|---|---|---|---|---|---|
| 0 | 0 | . | . | . | . | 1 | . | 1 |
| 0 | 0 | . | 0 | . | 1 | . | . | 1 |
| 0 | 0 | . | I | . | . | 0 | . | 0 |
| 0 | 0 | . | . | . | 0 | 0 | . | 0 |
| 0 | 1 | 0 | . | . | . | . | . | 1 |
| 0 | 1 | . | 0 | . | . | . | . | 1 |
| 0 | 1 | . | . | 0 | . | . | . | 1 |
| 0 | 1 | . | . | . | . | 1 | . | 1 |
| 0 | 1 | 1 | 1 | 1 | . | 0 | . | 0 |
| 1 | 0 | 1 | . | . | . | . | 0 | 0 |
| 1 | 0 | 0 | . | . | . | . | . | 1 |
| 1 | 0 | . | . | . | . | . | 1 | 1 |
| 1 | 1 | 1 | . | . | 0 | . | 0 | 0 |
| 1 | 1 | 1 | 1 | . | . | . | 0 | 0 |
| 1 | 1 | . | 0 | . | 1 | . | . | 1 |
| 1 | 1 | 0 | . | . | . | . | . | 1 |
| 1 | 1 | . | . | . | . | . | 1 | 1 |

24

ANNEXE III

## TABLEAU III

| Q0-I | Q1-I | 26 | 25' | 23 | 24 | T1 | T0 | 52 |
|------|------|----|-----|----|----|----|----|----|
| 1 | 1 | . | . | . | . | . | . | 0 |
| 0 | . | . | . | . | . | . | . | 1 |
| . | 0 | . | . | . | . | . | . | 1 |

## TABLEAU IV

| Q0-I | Q1-I | 26 | 25' | 23 | 24 | T1 | T0 | 75 |
|------|------|----|-----|----|----|----|----|----|
| . | . | 0 | . | . | . | . | . | 1 |
| . | . | 1 | . | . | . | . | . | 0 |

25

REVENDICATIONS

1. Dispositif de diagnostic et d'alarme associé à chaque station d'un réseau de communication de données du type dans lequel une station de commande communique avec au moins une station tributaire par un canal de transmission, chaque station comprenant un équipement terminal et un modem faisant l'interface entre l'équipement terminal et le canal de transmission, caractérisé en ce qu'il comprend:

un bus de liaison (10) reliant le modem au dispositif d'alarme (9) pour qu'il puisse recevoir des signaux de commande du modem et transmettre des signaux au modem,

une ligne de sortie (12) pour envoyer un signal sur le canal de transmission,

une ligne d'entrée (13) pour recevoir un signal du canal de transmission,

des moyens de détection de pannes (28, 29) pour détecter qu'une panne se produit dans le modem associé,

des moyens (34, 74) qui sous contrôle d'un signal de mise en service génère une tonalité d'alarme, lesdits moyens, étant reliés à la ligne de sortie,

des moyens (30, 70) qui en réponse à la détection d'une panne dans le modem associé applique le signal de mise en service aux moyens pour générer la tonalité d'alarme afin d'envoyer la tonalité d'alarme sur la ligne de sortie,

des moyens (38) pour détecter qu'une tonalité d'alarme est reçue sur la ligne d'entrée.

26

2. Dispositif selon la revendication 1 caractérisé en ce qu'il comprend:

des moyens (32, 70) pour appliquer le signal de mise en service aux moyens pour générer la tonalité d'alarme en réponse à un ordre d'envoi de tonalité d'alarme, reçu par le dispositif de diagnostic et d'alarme en provenance du modem par l'intermédiaire d'une ligne (25).

3. Dispositif selon la revendication 1 ou 2 caractérisé en ce que les moyens (28, 29) pour détecter qu'une panne se produit dans le modem associé comprennent:

un détecteur (41) recevant les tensions d'alimentation du modem et détectant qu'elles chutent à des valeurs auxquelles le modem ne fonctionne plus, pour détecter les pannes d'alimentation,

des moyens (23) recevant des indications d'erreur résultant d'une procédure de test du modem.

4. Dispositif selon la revendication 2 ou 3 caractérisé en ce qu'il comprend:

des moyens (24) pour mettre le dispositif d'alarme en mode de commande lorsqu'il est associé à un modem d'une station de commande, et pour le mettre en mode tributaire lorsqu'il est associé à un modem d'une station tributaire.

5. Dispositif selon la revendication 4 caractérisé en ce que lorsqu'il est en mode de commande il est sensible à l'ordre d'envoi de la tonalité d'alarme reçu du modem associé sur une ligne (25, 25') du bus, pour mettre en service les moyens de génération de la tonalité d'alarme, afin que ladite tonalité soit envoyée aux dispositifs de diagnostic et d'alarme des stations tributaires par la ligne de sortie et le canal de transmission.

6. Dispositif selon la revendication 5 caractérisé en ce que lorsqu'il est en mode tributaire les moyens de détection de la tonalité d'alarme (38, 27) provoquent le déclenchement d'une procédure de test du modem, lorsqu'ils reconnaissent une tonalité d'alarme sur la ligne d'entrée provenant du dispositif de diagnostic et d'alarme de la station de commande.

7. Dispositif selon l'une quelconque des revendications précédentes caractérisé en ce qu'il comprend:

un moyen de commutation (33; 76 à 79) reliant la ligne de sortie à la ligne d'entrée,

un moyen (26) pour commander la fermeture du moyen de commutation en réponse à un signal de commande envoyé par le modem associé sur le bus de liaison.

8. Dispositif selon l'une quelconque des revendications 3 à 7, caractérisé en ce que les moyens pour détecter les pannes des alimentations du modem associé comprennent:

des moyens (41) pour comparer les tensions d'alimentation à des seuils au-dessous desquels le modem ne fonctionne plus,

des premiers moyens (T6, T7) de commutation reliés aux tensions d'alimentation qui sont mis en position fermée lorsque les tensions d'alimentation sont supérieures aux seuils et en position ouverte lorsque les tensions d'alimentation sont inférieures aux seuils,

des moyens d'emmagasinage d'énergie (C1, C2) connectés aux alimentations de tension par l'intermédiaire des premiers moyens de commutation

28

des seconds moyens de commutation (T9, T10) qui sont connectés aux moyens d'emmagasinage d'énergie et qui sont mis en position fermée lorsque les premiers moyens sont en position ouverte et qui sont mis en position ouverte lorsque les premiers moyens sont fermés, lesdits seconds moyens de commutation servant à contrôler la mise en service des moyens de génération de la tonalité d'alarme.

9. Dispositif selon l'une quelconque des revendications précédentes caractérisé en ce que les moyens de détection de la tonalité d'alarme comprennent:

un premier filtre (60) accordé sur la fréquence de la tonalité d'alarme, connecté à la ligne d'entrée,

un second filtre (61) passe-bande dont la largeur de bande est égale à celle des signaux de données transmis sur le canal de transmission,

un premier redresseur (62) connecté au premier filtre,

un second redresseur (63) connecté au second filtre,

un comparateur (64) comprenant les sorties des premier et second redresseurs pour fournir l'indication que la tonalité d'alarme est reçue.

10. Dispositif selon l'une quelconque des revendications précédentes, caractérisé en ce que les moyens pour appliquer le signal de mise en service pour générer la tonalité d'alarme comprend une mémoire morte programmable (70) recevant les signaux d'entrée de commande par le bus de liaison à partir du modem et des signaux de chronologie pour générer sur une sortie le signal de mise en service en fonction des signaux de commande reçus.

# FIG. 1

# FIG. 5

FIG. 2

# FIG. 3

FIG. 4

0018517

QO-I QO-O 71

Q1-I BASC. D

Q1-O 72

BASC. D

23 ERREUR

MODE HORL.

24 TRI / COM

25' COM. TEST/RESULT. COM. BOBINE 76

26 TEST TEST 75

DDA 52 12

TI 74 77 79

TO

70 38 78 13

27 REMISE A ZERO

TO

73 FIG.6

TI

27' TON. ALAR. DET.

LIGNE 27

TO FIG.7

TI

27'

TEMPS

FIG.8

# RAPPORT DE RECHERCHE EUROPEENNE

Office européen des brevets

Numero de la demande

EP 80 10 1911

| | DOCUMENTS CONSIDERES COMME PERTINENTS | | CLASSEMENT DE LA DEMANDE (Int Cl ³) |
|---|---|---|---|
| Catégorie | Citation du document avec indication, en cas de besoin des parties pertinentes | Revendication concernee | |
| X | <u>DE - A - 2 824 578</u> (MILGO)<br>* Page 11, lignes 7-12; page 12, ligne 18 à page 13, ligne 13; page 14, lignes 1-31; page 23, ligne 13 à page 24, ligne 18, page 34, lignes 7-19; page 43, lignes 2-17; page 50, lignes 1-31; revendications 1-10; figure 7 * | 1-4,6-8,10 | H 04 L 1/24<br>11/12 |
| | <u>US - A - 4 055 808</u> (HOLSINGER)<br>* Colonne 2, lignes 41-63; colonne 3, ligne 41 à colonne 4, ligne 50 * | 1,4,6 | **DOMAINES TECHNIQUES RECHERCHES (Int. Cl. ³)**<br><br>H 04 L 1/00<br>1/24<br>11/08<br>11/12<br>H 04 B 3/46 |
| | IEEE NATIONAL TELECOMMUNICATIONS CONFERENCE, 29 novembre à 1er décembre 1976.<br>NEW YORK, US<br>S.U.H. QURESHI "Multipoint net-works: advances in modem design and control", pages 50.1-1 à 50.1-4<br>* Page 50.1-2, colonne de droite, ligne 11 à page 50.1-3, colonne de droite, ligne 39 * | 1 | |
| | NEC RESEARCH & DEVELOPMENT, no.48, janvier 1978,<br>Tokyo, JP.<br>K. SAKURAI et al. "New centralized supervisory system for trans-mission lines", pages 9-17.<br>* Page 9, colonne de droite, ligne 1 à page 11, colonne de droite, ligne 2; page 13, colonne de | 1,10 | **CATEGORIE DES DOCUMENTS CITES**<br><br>X: particulièrement pertinent<br>A: arrière-plan technologique<br>O: divulgation non-écrite<br>P: document intercalaire<br>T: théorie ou principe à la base de l'invention<br>E: demande faisant interférence<br>D: document cité dans la demande<br>L: document cité pour d'autres raisons |
| | | ./. | &. membre de la même famille, document correspondant |

Le présent rapport de recherche a été établi pour toutes les revendications

| Lieu de la recherche | Date d'achèvement de la recherche | Examinateur |
|---|---|---|
| La Haye | 10-06-1980 | YOULE |

OEB Form 1503.1 06.78

**Office européen**
**des brevets**

# RAPPORT DE RECHERCHE EUROPEENNE

| DOCUMENTS CONSIDERES COMME PERTINENTS | | | CLASSEMENT DE LA DEMANDE (Int. Cl. 3) |
|---|---|---|---|
| Catégorie | Citation du document avec indication, en cas de besoin, des parties pertinentes | Revendication concernée | |
| | droite, ligne 21 à page 15, colonne de gauche, ligne 33 * | | |
| | -- | | |
| | DE - A - 2 154 249 (LICENTIA PATENTVERWALTUNGS GmbH) <br> * Page 5, lignes 7-21; figure 1 * | 8 | |
| | -- | | |
| | US - A - 2 515 553 (FLOWERS) <br> * Figures 1,3 * | 9 | DOMAINES TECHNIQUES RECHERCHES (Int. Cl. 3) |
| | ---- | | |